Europäisches Patentamt

European Patent Office

Office européen des brevets

(11) Veröffentlichungsnummer : **0 040 731**
**B1**

(12) **EUROPÄISCHE PATENTSCHRIFT**

(45) Veröffentlichungstag der Patentschrift :
29.02.84

(51) Int. Cl.³ : **H 04 H   3/00**, H 04 B   7/26

(21) Anmeldenummer : 81103506.2

(22) Anmeldetag : 08.05.81

(54) **Verfahren und Anordnung zum zeitgleichen Aussenden von Nachrichten über mehrere Gleichwellensender.**

(30) Priorität : 28.05.80 DE 3020176

(43) Veröffentlichungstag der Anmeldung :
02.12.81 Patentblatt 81/48

(45) Bekanntmachung des Hinweises auf die Patenterteilung : 29.02.84 Patentblatt 84/09

(84) Benannte Vertragsstaaten :
DE GB IT LU NL

(56) Entgegenhaltungen :
DE-A- 2 614 918
DE-A- 2 812 774
GB-A- 1 136 071
GB-A- 2 001 230

(73) Patentinhaber : Licentia Patent-Verwaltungs-GmbH
Theodor-Stern-Kai 1
D-6000 Frankfurt/Main 70 (DE)

ANT Nachrichtentechnik GmbH
Gerberstrasse 33
D-7150 Backnang (DE)

(72) Erfinder : Bürk, Hans
Buchenweg 1
D-7911 Untereichingen (DE)
Erfinder : Drake, Jochen, Dipl.-Ing.
Am Pfingstanger 1
D-3340 Wolfenbüttel (DE)
Erfinder : Kersten, Karl-Heinz
Melanchthonstrasse 22
D-3340 Wolfenbüttel (DE)
Erfinder : Koch, Harry
Burgstrasse 263
D-3006 Burgwedel 3 (DE)
Erfinder : Plischke, Alfred
Lindenweg 11
D-7915 Oberelchingen (DE)
Erfinder : Ribhegge, Rudolf, Ing. grad.
Am Rehgräble 10
D-7914 Pfaffenhofen (DE)
Erfinder : Roll, Hans Peter, Ing. grad.
Ringstrasse 10
D-7901 Illerkirchberg (DE)

(74) Vertreter : Schickle, Gerhard, Dipl.-Ing. et al
ANT Nachrichtentechnik GmbH Patent- und Lizenzabteilung Gerberstrasse 33
D-7150 Backnang (DE)

## Verfahren und Anordnung zum zeitgleichen Aussenden von Nachrichten über mehrere Gleichwellensender

Die Erfindung betrifft ein Verfahren zum zeitgleichen Aussenden von Nachrichten über mehrere Gleichwellensender und eine Anordnung zur Durchführung des Verfahrens.

Für die einwandfreie Funktion eines Gleichwellensendernetzes ist unter anderem die gleichzeitige und phasenrichtige Aussendung der Information Bedingung. Die Sender erhalten die Nachrichten von einer Zentrale über unterschiedliche Wege, wie Drahtleitungen oder Funkzubringer. Dabei erhalten die Nachrichten unterschiedliche Zeitverzögerungen. Diese werden beim derzeitigen Stand der Technik für jeden Weg ermittelt und durch fest eingebaute Laufzeitnachbildungen oder durch eine verzögerte zentrale Aussendung der für den kürzeren Weg bestimmten Signale ausgeglichen (GB-A-2 001 230). Bei Änderung der Laufzeit auch nur eines Weges, z. B. durch Leitungsumschaltungen, muß das gesamte System entsprechend korrigiert werden. Das bedeutet einen hohen Aufwand an technischen Mitteln, wenn automatisch oder manuell Laufzeitänderungen vorgenommen werden müssen.

Aufgabe der Erfindung ist es daher, ein Verfahren der eingangs genannten Art anzugeben, das sicherstellt, daß alle Gleichwellensender die Nachrichten zeitgleich aussenden, auch wenn Leitungen umgeschaltet werden, ohne daß die Verzögerungen für das Sendernetz neu festgelegt werden müssen.

Das erfindungsgemäße Verfahren ist im Anspruch 1 beschrieben, erfindungsgemäße Anordnungen in den Ansprüchen 11, 17 und 22. Die weiteren Ansprüche beinhalten vorteilhafte Weiterbildungen bzw. Ausführungen der Erfindung.

Die Erfindung wird im folgenden anhand der Figuren näher erläutert.

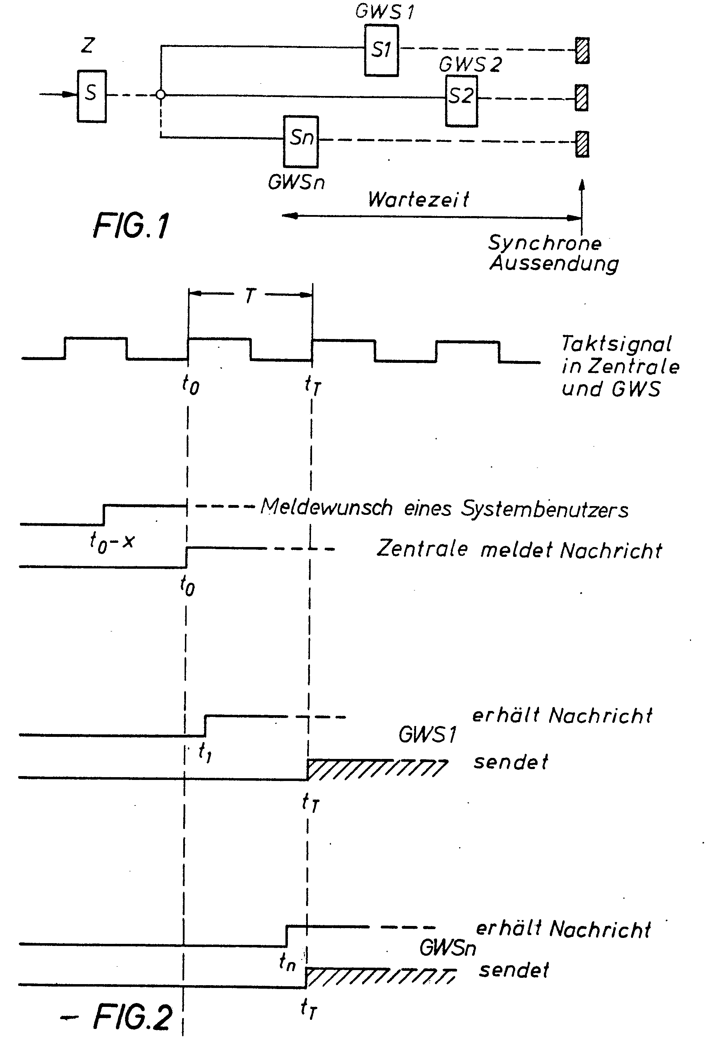

In Fig. 1 ist ein kombiniertes Weg-Zeit Schaubild dargestellt. Die gezeigte Ausführungsform der Erfindung ist vor allem für Datenaussendung geeignet. In der Zentrale Z werden die auszusendenden Informationen zunächst in einem Speicher S zurückgehalten, dann über Zubringer an die verschiedenen Gleichwellensender GWS1 bis GWSn gegeben. Dort werden die Informationen in Speichern S1 bis Sn für eine Wartezeit festgehalten, und zwar mindestens so lange, bis die Informationen den längsten möglichen Laufweg durchlaufen haben. Die Wartezeit kann so bemessen werden, daß mögliche Wegänderungen, z. B. durch Leitungsumschaltungen, auf jeden Fall berücksichtigt werden. Nach der Wartezeit erfolgt auf ein Taktsignal hin der synchrone Abruf aus den Speichern S1 bis Sn und die synchrone Aussendung über die Gleichwellensender. Die Speicher können z. B. Datenspeicher oder Schieberegister sein.

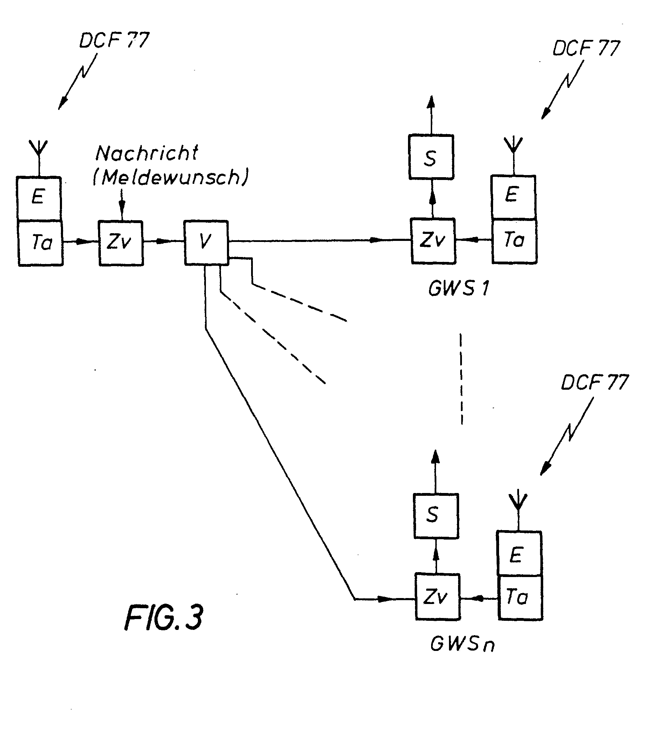

Fig. 2 zeigt ein Zeitdiagramm für den Sendeablauf nach einer vorteilhaften Weiterbildung der Erfindung. In der Zentrale wie in den Gleichwellensendern GWS1 bis GWSn wird synchron das Taktsignal erzeugt. Dieses hat eine Periode T, die länger ist als die längstmögliche Laufzeit der Nachrichten ; d. h. die Periode T umfaßt die oben besprochenen Laufzeiten und die Wartezeit in den jeweiligen Speichern S1 bis Sn (Fig. 1) oder Verzögerungseinrichtungen Zv (Fig. 3). In der Zentrale liegt nun zu einer zeit $t_n$-x ein Meldewunsch vor. Die Nachricht wird nicht sofort abgesetzt, sondern erst bei der ersten folgenden positiven Flanke $t_0$ des Taktsignals. Die Nachricht erreicht die Gleichwellensender GWS1 bis GWSn zu den Zeiten $t_1$ bis $t_n$. Sie wird wieder zurückgehalten und dann mit der nächsten positiven Flanke $t_T$ des Taktsignals zeitgleich von allen Gleichwellensendern ausgesendet.

Fig. 3 zeigt eine Anordnung in Weiterbildung der Erfindung. Mit dieser Anordnung kann auch das soeben anhand von Fig. 2 beschriebene Verfahren durchgeführt werden. Die Zentrale Z sowie die Gleichwellensender GWS1 bis GWSn enthalten je einen Empfänger E zum Empfang eines Zeitzeichensenders, hier des DCF 77. Dieser hochstabile Zeitzeichen- und Normalfrequenzsender auf der Frequenz 77,5 kHz kann in Deutschland überall empfangen werden. Damit ist es möglich, Taktgeneratoren zu synchronisieren und über praktisch unbegrenzte Zeit eine extreme Frequenz- bzw. Zeitgenauigkeit zu erhalten. Wie in Fig. 3 gezeigt, ist das von DCF 77 empfangene Signal jeweils einem Taktgeber Ta zur Synchronisierung zugeführt. Sofern die Gleichwellensender nicht zu weit voneinander entfernt sind (einige Kilometer), kann die Laufzeit des DCF 77 vernachlässigt werden, ansonsten ist sie in einfachster Weise zu berücksichtigen : Es würde bereits genügen, die Entfernungsunterschiede der Gelichwellensender in Bezug auf DCF 77 aus der Landkarte zu ermitteln und einzelne Taktgeber definiert vor- oder nachlaufen zu lassen. Dieser Laufweg ändert sich jedenfalls nicht. In Fig. 3 werden die Nachrichten in der Zentrale Z zunächst in die Verzögerungseinrichtung Zv (oder einen Speicher) gegeben und von da aus, gesteuert durch den Taktgeber Ta, über einen Verteiler V an die Gleichwellensender GWS1 bis GWSn. Dort gelangen die Nachrichten wiederum in die Verzögerungseinrichtungen Zv (oder in Speicher), und von da aus, gesteuert durch die Taktgeber Ta, auf die Sender S. Geeignete Verzögerungseinrichtungen Zv für analoge Nachrichten wären z. B. die bekannten Eimerkettenschaltungen.

Die weiteren Figuren beziehen sich auf Ausführungsformen, bei denen das Taktsignal nicht mit Hilfe eines systemexternen Zeitzeichensenders synchronisiert wird. Statt dessen erfolgt die Bereitstellung des nicht unbedingt periodischen Taktsignals in den Gleichwellensendern entweder dadurch, daß es drahtlos von der Zentrale übermittelt und in den Gleichwellensendern (nach Verstärkung) verwendet wird, oder daß in den Gelichwellensendern Taktgeber vorgesehen sind, die durch drahtlos übermittelte Synchronisationssignale von der Zentrale synchronisiert werden. Die in beiden Fällen von der Zentrale ausgehende drahtlose Übermittlung von (Takt- bzw. Synchronisations-) Signalen kann simultan, d. h. gleichzeitig mit den Aussendungen der Gleichwellensender erfolgen, jedoch auf einer Frequenz, die von der Sendefrequenz der Gleichwellensender abweicht. Die Takt- oder Synchronisations-Signalübermittlung kann aber auch sequentiell erfolgen, d. h., die von der Zentrale zu den Gleichwellensendern zu übertragenden Takt- bzw. Synchronisationssignale werden (z. B. periodisch) immer nur dann übertragen, wenn die Gleichwellensender gerade nicht senden. Schließlich ist auch noch eine Übertragung mit Wellen möglich, die anders polarisiert sind als die von den Gleichwellensendern ausgesendeten Wellen.

Bevorzugt wird die sequentielle Übertragung (d. h. Bereitstellung bestimmter Zeitschlitze (oder Raster) jeweils für die Nutz- bzw. Taktsignalübertragung), und zwar deshalb, weil sie es ermöglicht, daß in den Gleichwellensendern Synchronisationssignalempfänger verwendet werden können, die im Aufbau denjenigen (insbesondere mobilen) Empfängern entsprechen, welche die Gleichwellensendungen empfangen.

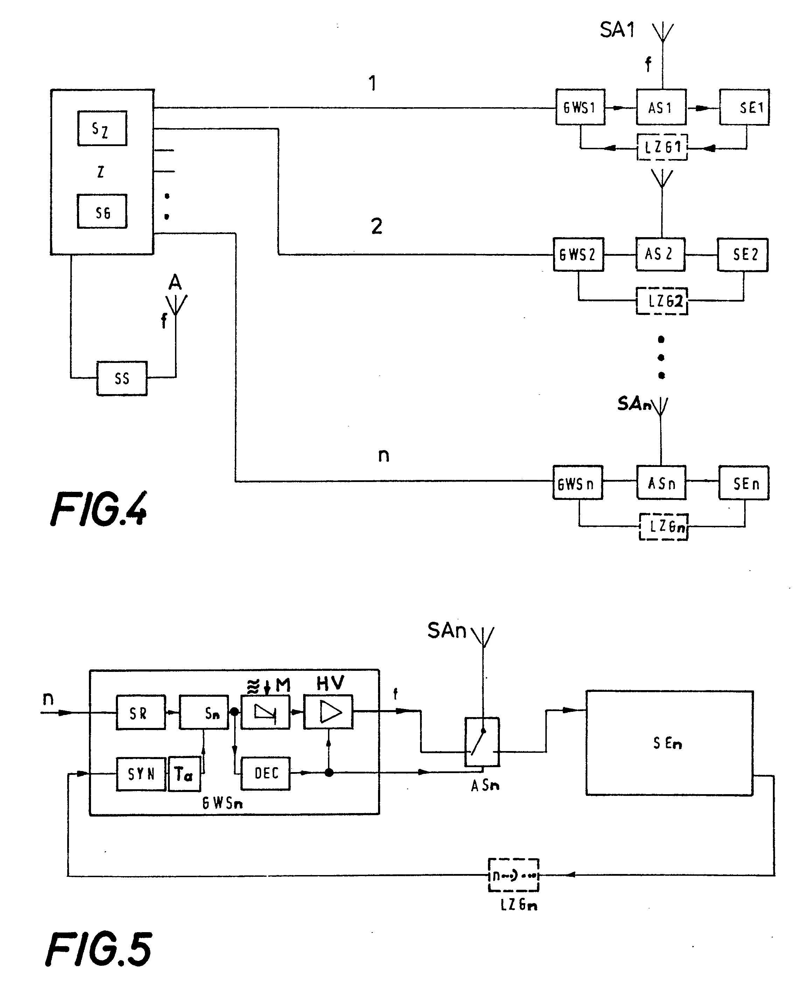

Ein Ausführungsbeispiel, mit dem dieser Vorteil genutzt werden kann, ist in Fig. 4 dargestellt in Gestalt eines Blockschaltbildes eines Gleichwellensystems. Bei einer Zentrale ist ein Synchronisationssignalsender SS vorgesehen, der in periodischen Sendepausen auf derselben Sendefrequenz f wie die Gleichwellensender GWS1 ... n arbeitet. Ansonsten enthält die Zentrale Z anstelle der Verzögerungseinrichtung der Fig. 3 einen Zentralspeicher $S_Z$ zur Zwischenspeicherung der Nachrichten, die anschließend nach dem Zeitplan der Fig. 2 über Zubringerstrecken 1, 2 ... n an die Gleichwellensender verteilt werden sollen. Ferner enthält die Zentrale Z neben einem nicht gezeigten Taktgeber (wie in Fig. 3) einen von diesem gesteuerten eigenen Synchronisationssignalgenerator SG, der die Synchronisationssignale erzeugt, welche vom Synchronisationssignalsender SS drahtlos über eine Antenne A ausgesendet werden und in Gleichwellensenderstellen dort angeordnete Taktgeber synchronisieren sollen. Dabei ist — wie auch im Zusammenhang mit allen anderen Figuren — vorausgesetzt, daß die Kurzzeitinstabilität der synchronisierbaren (z. B. rücksetzbaren) Taktgeber in den Gleichwellensendern klein ist im Verhältnis zur Bitlänge (Bitdauer) der als Nachrichten zu übertragenden Telegramme.

Die einzelnen Gleichwellensenderstellen sind im Prinzip untereinander gleich aufgebaut: Die erste enthält beispielsweise einen Gleichwellensender GWS1, einen Synchronisationssignalempfänger SE1 und einen Antennenumschalter AS1 mit einer gemeinsamen Sendeempfangsantenne SA1. Statt des Antennenumschalters kann auch ein Zirkulator verwendet werden oder getrennte Sende- und Empfangsantennen.

In Fig. 5 ist ein Blockschaltbild einer einzelnen Gleichwellensendestelle mit dem Index n gezeigt. Zusätzlich zu den Einzelheiten von Fig. 4 ist in Fig. 5 ein Nachrichten- oder Nutzsignalregenerator SR im Gleichwellensender GWSn dargestellt sowie als Speicher für die auf der Zubringerstrecke n eingehenden Nachrichten ein Nutzsignalspeicher Sn, ein das Auslesen des Nutzsignalspeichers steuernder Taktgeber TA, eine diesen steuernde Synchronisationseinrichtung SYN, ein Modulator M, ein nachgeschalteter Hochfrequenzverstärker HV und ein diesen aktivierender Decoder DEC, der auch den Antennenumschalter ASn steuert.

Das dargestellte Ausführungsbeispiel ist speziell für periodische Datenaussendung im getasteten Betrieb geeignet. Bei der Übertragung analoger Signale sind die Speicher $S_Z$ und Sn durch Analog/Digital-Wandler am Eingang und Digital/Analog-Wandler am Ausgang zu ergänzen oder durch Analog-Prozessoren (z. B. Intel 2920) zu ersetzen.

Der Zentralspeicher $S_Z$ und der Nutzsignalspeicher Sn sind bezüglich ihrer Speicherkapazität eingerichtet auf die Zwischenspeicherung von Nutzsignaltelegrammblöcken, in welchen die Nachrichten enthalten sind, die auf den Zubringerstrecken 1 bis n übermittelt werden sollen. Diesen Speichern zugeordnete Taktgeber beeinflussen Steuermittel für die Speicher zur Steuerung des Auslesens der Nutzsignaltelegrammblöcke vor deren Übermittlung an die Gleichwellensender (zum Zeitpunkt $t_0$ in Fig. 2) bzw. vor Aussendung durch die Gleichwellensender (zum Zeitpunkt $t_T$ in Fig. 2).

Da der Synchronisationssignalsender SS der Zentrale Z ausgebildet ist für eine von den Gleichwellensendern abweichende Sendezeit (dies bedeutet: Ausstrahlung des Synchronisationssignals in den Sendepausen der Gleichwellensender), muß zur Aufrechterhaltung eines geordneten sequentiellen Sendebetriebes, d. h. zur Bereitstellung abwechselnder Sendezeiten für die Zentrale und die Gleichwellensender, die Dauer einer Taktsignalperiode T in Fig. 2 mindestens gleich der Summe aus der Sendedauer für ein Synchronisationssignal und der zugehörigen maximalen Übertragungsdauer für einen Nutzsignaltelegrammblock zuzüglich dessen drahtloser Übertragungsdauer gewählt sein. Durch die Taktgeber Ta in der Zentrale und den Gleichwellensendern sowie durch die Synchronisationseinrichtung SYN ist dann sichergestellt, daß die Gleichwellensendezeiten sich auf die Pausen der Sendezeiten für die Synchronisationssignale beschränken.

Damit in den Gleichwellensenderstellen die von der Zentrale ausgesendeten Synchronisationssignale sicher von anderen Signalen unterschieden werden können, ist es zweckmäßig, wenn der Synchronisationssignalsender Mittel zur Adressierung des Synchronisationssignales enthält, welchen bei den Synchronisationssignalempfängern SE1 ... n Decodierungsmittel gegenüberstehen für das an sie adressierte Synchronisationssignal.

Arbeitsweise des Systems nach den Figuren 4 und 5 :

In der Zentrale Z werden die auszusendenden Nachrichten zunächst in dem Zentralspeicher $S_Z$ gesammelt, d. h. zu einem Nuzsignaltelegrammblock zusammengefaßt, und dann zwischengespeichert bis zu einem vorbestimmten ersten Phasenwenkel einer als Taktsignal dienenden periodischen Taktschwingung. Erst bei Erreichen dieses Phasenwinkels (zur Zeit $t_0$ in Fig. 2) wird der Nutzsignaltelegrammblock über die Zubringerstrecken 1 ... n an die Gleichwellensender übermittelt. Dort wird der Nutzsignaltelegrammblock in einem Nutzsignalregenerator SR aufbereitet, um die Verringerung des Signal/Rauschverhältnisses, welche durch die Übertragung über die Zubringerstrecken aufgetreten ist, wieder auszugleichen. Die danach als digitale Signale, beispielsweise in NRZ (No Return to Zero), vorliegenden Nutzsignaltelegrammblöcke werden dann im Nutzsignalspeicher Sn zwischengespeichert bis zu einem zweiten vorbestimmten Phasenwinkel der im zugehörigen Gleichwellensender GWSn reproduzierten Taktschwingung. Erst nach Erreichen dieses zweiten Phasenwinkels (zur Zeit $t_T$ in Fig. 2) wird der Nutzsignaltelegrammblock über die Sendeempfangsantenne SAn gesendet. Damit diese Sendezeit nicht mehr in die Sendezeit des Synchronisationssignalsenders SS fällt, muß die Dauer vom Erreichen des ersten Phasenwinkels ($t_0$) bis zum Erreichen des zweiten Phasenwinkels ($T_T$) länger gewählt sein als die längstmögliche Laufzeit des Nutzsignaltelegrammblocks von der Zentrale Z bis zu irgendeinem der Gleichwellensender GWS1 ... n.

Das gemeinsame Taktsignal wird in den Standorten der Gleichwellensender aus quarzstabilisierten Oszillatoren abgeleitet, die periodisch nachsynchronisiert werden. In diesem Zusammenhang wird vorausgesetzt, daß die Kurzzeitinstabilität dieser Oszillatoren und damit der aus ihnen abgeleiteten Taktschwingung klein im Verhältnis zur Bitlänge (Bitdauer) ist. Aus dem Zusammenhang zwischen Kurzzeitinstabilität $\Delta f/f_{OSZ}$ und Bitlänge $t_{Bit}$ läßt sich die Periodendauer $t_{SYN}$ des (Nach) Synchronisationssignals bestimmen :

$$t_{SYN} < \Delta f/f_{OSZ} \cdot \varepsilon \cdot t_{Bit}$$

mit $\varepsilon \approx 0,1 ... 0,2$ ($\varepsilon$ = zulässiger Fehler).

Zur periodischen Nachsynchronisation werden (gesteuert vom Synchronisationssignalgenerator SG) in der Zentrale Z vom Synchronisationssignalsender SS Synchronisationssignale in Form von Synchrontelegrammen abgesetzt, die von den Synchronisationsempfängern SE1 ... n empfangen, demoduliert und der Synchronisationseinrichtung SYN zur Synchronisation des Taktgebers Ta zugeführt werden. Die Synchrontelegramme werden bevorzugt auf der Frequenz f zum Zeitpunkt $t_0$ (Fig. 2) ausgestrahlt, wenn — wie im Zusammenhang mit Figuren 4 und 5 vorausgesetzt — bei sequentiellem Betrieb die Synchrontelegramme in den Sendepausen der Gleichwellensender ausgestrahlt werden. Im Simultanbetrieb dagegen können die Synchrontelegramme auf einer von der Sendefrequenz f der Gleichwellensender verschiedenen Frequenz oder auch mit anderer Polarisation zu beliebigen, geeigneten Zeitpunkten ausgestrahlt werden.

Bei den bisherigen Erläuterungen ist davon ausgegangen worden, daß die zentral ausgesendeten Synchronisationssignale alle gleichzeitig von den Synchronisationssignalempfängern SE1 ... n empfangen werden. Wenn dies nicht der Fall ist, kann in einzelnen Gleichwellensendestellen irgendwo zwischen dem jeweiligen Synchronisationssignalempfänger, z. B. SEn, und dem Steuereingang des Nutzsignalspeichers Sn als Laufzeitausgleich mindestens für das Taktsignal ein Ausgleichsmittel LZGn vorgesehen sein zum Ausgleich der jeweiligen Synchronisationssignal-Laufzeitdifferenz gegenüber der maximalen Synchronisationssignal-Laufzeit.

Zur Erläuterung der Funktionsweise des Decoders DEC muß noch etwas näher auf die Signalaufbereitungen eingegangen werden :

Da zur Systemvereinfachung die Synchronisationssignalempfänger SE1 ... n und folglich auch die Codierung der Synchrontelegramme den im gesamten Gleichwellensystem verwendeten (mobilen) Empfängern bzw. Codeformater entspricht, muß der prinzipielle Aufbau der Synchrontelegramme dem der Nutzsignaltelegrammblöcke entsprechen, die letztlich von den Gleichwellensendern ausgesendet werden. Den Synchrontelegrammen muß also eine Adresse, nämlich diejenige der Gleichwellensender, vorangestellt sein, wofür ein geringer Teil der Adresskapazität des Systems geopfert werden muß als Preis für die Einheitlichkeit der mobilen Empfänger und der Synchronisationssignalempfänger. Bei Adresskapazitäten in der Größenordnung von $10^6$ für den Selektivruf der mobilen Empfänger ist der Verlust von einigen 10 bis ca. 100 Adressen vernachlässigbar. Die Decoder in den Synchronisationssignalempfängern SE1 ... n müssen gruppenrufberechtigt sein, damit alle Synchronisationssignalempfänger durch eine gemeinsame Adresse angesteuert werden können.

Die Nutzsignalzuführung, -aufbereitung und -aussendung erfolgt dann derart, daß die Zentrale Z einen Nutzsignaltelegrammblock mit mehreren Nachrichtentelegrammen über drahtgebundene und/oder drahtlose Zubringerstrecken 1 bis n an die Gleichwellensender sendet. Der Nutzsignaltelegrammblock besteht vorteilhafterweise aus :

1. Sendereinschalttelegramm « Ein »,
2. Nachrichtentelegrammen, bestehend jeweils aus
   2.1. Vorlauf,
   2.2. Synchronwort,
   2.3. Adressteil,
   2.4. Nachrichtenteil,
   2.5. Redundanz,
3. Senderausschalttelegramm « Aus ».

In den einzelnen Gleichwellensendern werden die Nutzsignaltelegramme aufbereitet, d. h. demoduliert und decodiert, geprüft und entsprechend der Korrekturkapazität des Nutzsignalregenerators SR korrigiert. Um störende Interferenzen zu vermeiden, werden nicht erkannte bzw. nicht korrigierbare Nutzsignaltelegramme durch « Aus »-Schalttelegramme ersetzt, die den betroffenen Gleichwellensender jeweils für die Dauer eines Nutztelegramms austasten. Anschließend werden die Nutzsignaltelegramme in den Nutzsignalspeicher Sn des Gleichwellensenders eingelesen. (Bei Übertragung analoger Signale ist an dieser Stelle eine Analog/Digital-Wandlung vorzunehmen). Nach Ablauf der konstanten, maximalen Nutzsignal-Laufzeit einschließlich einer angemessenen Sicherheitsmarge (für Leitungsumschaltungen) gibt der synchronisierte Taktgeber Ta ein Signal zum Auslesen des Nutzsignalspeichers Sn ab. Die Synchronisationseinrichtung SYN synchronisiert zu geeigneten Zeitpunkten den Taktgeber Ta im Gleichwellensender, z. B. durch Freigabe der Teilerstufen eines Taktoszillators. Die Synchronisation kann beispielsweise am Anfang jedes Nutzsignaltelegrammblockes erfolgen.

Unter der Voraussetzung, daß die unterschiedlichen, konstanten Hochfrequenz-Laufzeiten der Synchrontelegramme durch die Laufzeit-Ausgleichsmittel LZG1 ... n hinter dem Synchronisationssignalempfänger SE1 ... n ausgeglichen werden, kann der Takt im Gleichwellensystem bis auf einen Restfehler synchronisiert werden.

Ein am Ausgang des Nutzsignalspeichers Sn parallel geschalteter Decoder DEC erkennt das Sendereinschalttelegramm « Ein » am Anfang und das Senderausschalttelegramm « Aus » am Ende des Nutzsignaltelegrammblocks und bewirkt das Ein- und Ausschalten eines nachgeschalteten Hochfrequenz-Verstärkers HV. Hinter dem Nutzsignalspeicher Sn wird der NRZ-Datenstrom wieder in ein sendefähiges Signal umgewandelt und einem Modulator M zugeführt, der dem Hochfrequenz-Verstärker HV vorgeschaltet ist.

Wenn der Synchronisationssignalempfänger SE1 ... n nicht mit einer auf den Synchronisationssignalsender SS ausgerichteten Richtantenne ausgerüstet werden muß, kann der Synchronisationssignalempfänger an die Sendeempfangsantenne SA1 ... n des Gleichwellensenders angeschlossen werden. Dazu wird diese Antenne über einen Zirkulator oder einen Antennenumschalter AS1 ... n an den Synchronisationssignalempfänger SE1 ... n oder an den Gleichwellensender GWS1 ... n geschaltet, wobei der Antennenumschalter gesteuert wird von dem Sendereinschalttelegramm « Ein » und dem Senderausschalttelegramm « Aus ».

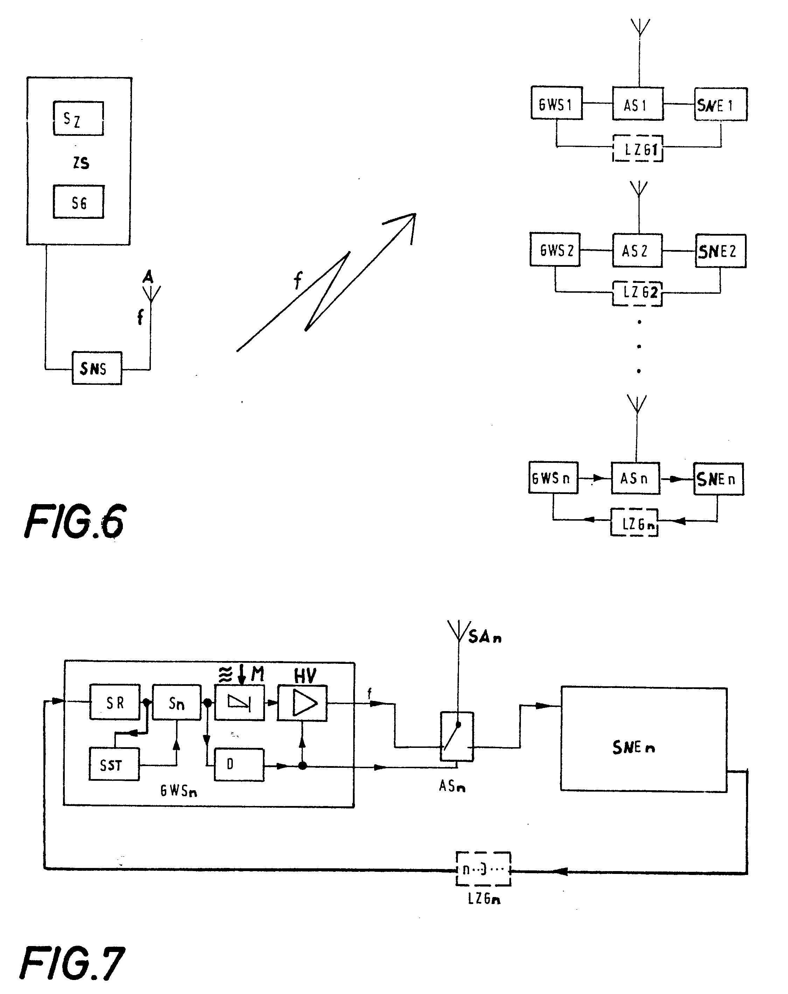

Eine vorteilhafte Abwandlung des beschriebenen Verfahrens läßt sich bei einem Verkehrsaufkommen durchführen, das im Mittel kleiner als 50 % der Verkehrskapazität des Systems ist. In diesem anhand der Figuren 6 und 7 beschriebenen Fall lassen sich die Nachrichten gemeinsam mit dem Synchronisationssignal über einen Synchronisations- und Nutzsignalsender SNS beim Zentralsender ZS übertragen. Auf die für die Übertragung der Nachrichten von der Zentrale (Z in Fig. 4) zu den Gleichwellensendern bisher erforderlichen Leitungen oder gesonderten Richtfunkkanäle für die Zubringerstrecken 1 bis n kann dadurch verzichtet werden. Eine synchrone Aussendung der Nachrichten durch die Gleichwellensender wird durch Ausgleich der konstanten Hochfrequenzlaufzeiten z. B. durch ein Laufzeitglied LZG1 ... n zwischen jeweils dem Synchronisations- und Nutzsignalempfänger SNE1 ... n und dem Gleichwellensender GWS1 ... n erreicht. Weiterhin ist dem Sendereinschalttelegramm « Ein » ein Synchrontelegramm voranzustellen (oder eine Synchroninformation im Sendereinschalttelegramm zu verschachteln), das die Taktgeber in den Gleichwellensendern synchronisiert. Die Freigabe des Nutzsignalspeichers Sn in Fig. 7 wird dann simultan aus dem Senderausschalttelegramm « Aus » abgeleitet, das mit Hilfe eines Decoders in einer Speichersteuerung SSt erkannt wird.

In Fig. 6 sind zur Durchführung dieses abgewandelten Verfahrens in der ansonsten ähnlich wie in Fig. 4 aufgebauten Zentrale ZS Adressierungsmittel zur Adressierung der Gleichwellensender vorgesehen sowie Mittel zum Voranstellen der Taktsignale vorgesehen sowie Mittel zum Voranstellen der Taktsignale vor jeweils einen Nutzsignaltelegrammblock, sei es unmittelbar oder in Gestalt eines Synchrontelegramms. In den ansonsten wie in Fig. 5 aufgebauten Gleichwellensendern nach den Fig. 6 und 7 bestehen Steuermittel einerseits zum Auslesen des Nutzsignalspeichers Sn und andererseits zum anschließenden Aussenden des ausgelesenen Nutzsignaltelegrammblocks bei Auftreten eines vorbestimmten Phasenwinkels des zugehörigen, laufzeitkorrigierten Taktsignals aus der Speichersteuerung SST bzw. einem Decoder D, von welchem aus eine Steuerleitung zum Hochfrequenzverstärker HV und zum Antennenumschalter ASn führt, damit diese Teile auf Sendebetrieb gestellt werden können.

Der Funktionsablauf ist folgender :

Die Nachrichten werden innerhalb einer bestimmten Zeitspanne mit dem Taktsignal zusammen von der Zentrale ZS zu den Synchronisations- und Nutzsignalempfängern SNE1 ... n auf der Arbeitsfrequenz f des Gleichwellensystems drahtlos übertragen mit jeweils konstaten Laufzeiten zu den einzelnen Gleichwellensendern. Das Taktsignal wird jeweils am Anfang eines Nutzsignaltelegrammblocks übertragen. Nach dem Empfang wird der Nutzsignaltelegrammblock mit dem Taktsignal hinter dem Ausgang des Synchronisations- und Nutzsignalempfängers SNEn durch ein je nach Standort der Gleichwellensendestelle bemessenes Laufzeitglied LZGn soweit verzögert, daß die Gesamtlaufzeit von der Zentrale bis zum Eingang des Gleichwellensenders GWSn der bei einem der Gleichwellensender möglichen Maximallaufzeit entspricht entsprechend der größten räumlichen Entfernung zwischen Zentralsender und einem der Gleichwellensender. Über dieses Laufzeitglied laufen sowohl die Nutzsignaltelegrammblöcke als auch das Takt-, Synchronisations- oder Speicherauslesesignal. Nach Regeneration im Signalregenerator SR wird der Nutzsignaltelegrammblock in den Nutzsignalspeicher Sn eingelesen. Dort findet eine Zwischenspeicherung statt. Die das « Ein »/« Aus »-Signal erkennende Speichersteuerung SST veranlaßt dann, wenn keine weiteren Signale über den Synchronisations- und Nutzsignalempfänger SNEn eintreffen, das Auslesen des Nutzsignalspeichers Sn. Diese Veranlassung des Auslesens kann entweder durch das Taktsignal hervorgerufen sein. Es kann aber auch auf ein periodisches Takt- oder Synchronisationssignal überhaupt verzichtet werden, wenn nach geeigneter Zeitverzögerung vom Zentralsender ein Signal zum Auslesen des Nutzsignalspeichers Sn (vorzugsweise auf der Arbeitsfrequenz f des Gleichwellensystems, wegen der Frequenzökonomie) ausgesendet wird.

Beim Auslesen des Nutzsignalspeichers Sn erscheint an dessen Ausganz ein « Ein »-Signal, das einen Decoder D veranlaßt, die Auftastung des Hochfrequenzträgers, die Umschaltung des Antennenumschalters ASn auf Sendebetrieb und die Aussendung des Nutzsignaltelegrammblockes über die Sendeempfangsantenne SAn vorzunehmen. Auf diese Weise ist der jeweils sequentielle Betrieb des Zentralsenders ZS und der Gleichwellensender GWS1 ... n sichergestellt. Dabei muß aber dafür gesorgt sein, daß die Systemperiode, d. h. die Zeit von jeweils dem Beginn einer nachrichtenübermittlung von der Zentrale zu den Gleichwellensendern bis zum Beginn der nächsten Nachrichtenübermittlung, mindestens gleich der zweifachen Dauer eines Nutzsignaltelegrammblockes zuzüglich der maximalen Laufzeit der Laufwege von der Zentrale zu den Gleichwellensendern und von dort zu den (mobilen) Empfängern ist.

Die Rückschaltung des Antennenumschalters ASn auf Empfang für den Synchronisations- und Nutzsignalempfänger SNEn wird aus dem « Aus »-Signal abgeleitet.

Das Laufzeitglied LZGn kann übrigens auch an einer anderen geeigneten Stelle angeordnet sein, beispielsweise unmittelbar vor oder hinter der Speichersteuerung SST.

Zusammenfassend kann die Erfindung folgendermaßen beschrieben werden :

Zum zeitgleichen Aussenden von Nachrichten, welche von einer Zentrale ausgehen, über mehrere Gleichwellensender wird vorgeschlagen, daß die Nachrichten in den Gleichwellensendern gespeichert bzw. verzögert werden für eine Wartezeit, bis die längstmögliche Laufzeit der Nachrichten von der Zentrale zu den Gleichwellensendern verstrichen ist ; anschließend werden die Nachrichten auf ein nicht notwendigerweise periodisches Taktsignal hin, das für alle Gleichwellensender verbindlich ist, synchron von den Gleichwellensendern ausgesendet. Zur Bereitstellung des Taktsignales in den Gleichwellensendern können dort entweder Taktsignalgeber über Funk von der Zentrale her synchronisiert werden oder ein von der Zentrale über Funk je nach Laufzeit der Nutzsignaltelegrammblöcke mehr oder weniger verzögert ausgesendetes Taktsignal kann in den Gleichwellensendern direkt zur Steuerung des Auslesens der Signalspeicher benutzt werden.

## Ansprüche

1. Verfahren zum zeitgleichen Aussenden von Nachrichten, welche von einer Zentrale ausgehen, über mehrere Gleichwellensender, dadurch gekennzeichnet, daß die Nachrichten in den Gleichwellensendern gespeichert oder verzögert werden für eine Wartezeit, bis die längstmögliche Laufzeit der Nachrichten von der Zentrale zu den Gleichwellensendern verstrichen ist, und daß die Nachrichten dann auf ein nicht unbedingt periodisches Taktsignal hin synchron von den Gleichwellensendern ausgesendet werden.

2. Verfahren nach Anspruch 1, dadurch gekennzeichnet, daß die Wartezeit um einen weiteren Zeitraum verlängert wird, um mögliche Laufzeitverlängerungen durch Laufwegumschaltungen abzufangen.

3. Verfahren nach Anspruch 1 oder 2, dadurch gekennzeichnet, daß das Taktsignal eine Periode (T) hat, die länger ist als die längstmögliche Laufzeit der Nachrichten von der Zentrale zu den Gleichwellensendern, daß die Zentrale Nachrichten erst bei einer positiven Flanke ($t_0$) des Taktsignals zu den Gleichwellensendern sendet und daß die Gleichwellensender die Nachrichten bei der nächsten positiven Flanke ($t_T$) des Taktsignals aussenden.

4. Verfahren nach Anspruch 3, dadurch gekennzeichnet, daß in der Zentrale und den Gleichwellensendern das Taktsignal durch den Empfang eines Zeitzeichensenders, z. B. DCF 77, synchronisiert wird.

5. Verfahren nach Anspruch 1 oder 2, dadurch gekennzeichnet,

daß als Taktsignal (Fig. 2) eine periodische Taktschwingung dient,

daß ein die Nachrichten enthaltender Nutzsignaltelegrammblock in der Zentrale (Z, ZS) bis zu einem vorbestimmten ersten Phasenwinkel der Taktschwingung zwischengespeichert und erst bei Erreichen dieses Phasenwinkels an die Gleichwellensender (GWS1 ... n) adressiert übermittelt wird,

daß dieser von den einzelnen Gleichwellensendern empfangene Nutzsignaltelegrammblock jeweils in den Gleichwellensendern bis zu einem zweiten vorbestimmten Phasenwinkel der im Gleichwellensender jeweils reproduzierten Taktschwingung zwischengespeichert und erst bei Erreichen dieses zweiten Phasenwinkels gesendet wird und

daß die Dauer (T) vom Erreichen des ersten Phasenwinkels bis zum Erreichen des zweiten Phasenwinkels länger gewählt ist als die längstmögliche Laufzeit des Nutzsignaltelegrammblocks von der Zentrale bis zu einem Gleichwellensender.

6. Verfahren nach einem der Ansprüche 1 bis 3 oder 5, dadurch gekennzeichnet, daß ein in einem Gleichwellensender (GWS1 ... n) direkt verwendbares Taktsignal oder zumindest ein zur Ableitung eines Taktsignales in einem Gleichwellensender geeignetes Synchronisationssignal in der Zentrale (Z, ZS) erzeugt und von dort aus wenigstens einem Gleichwellensender (GWS) drahtlos übermittelt wird, während die Nachrichten zu wenigstens einem der Gleichwellensender auf einer Zubringerstrecke (1, 2 ... n) gelangen, die gegenüber der drahtlosen Übermittlung des Synchronisationssignals eine längere Übertragungszeit beansprucht.

7. Verfahren nach Anspruch 6, dadurch gekennzeichnet, daß die drahtlose Übermittlung des Takt- oder Synchronisationssignales entweder auf einer von der Gleichwellensendefrequenz (f) abweichenden Sendefrequenz und/oder mit Hilfe von Wellen, die gegenüber den Gleichwellensenderwellen anders polarisiert sind, oder aber auf derselben Sendefrequenz erfolgt, wobei im letzteren Fall die Übermittlung in den gemeinsamen Sendepausen der einzelnen Gleichwellensender und/oder mit Holfe von Wellen erfolgt, die gegenüber den Gleichwellensenderwellen anders polarisiert sind.

8. Verfahren nach Anspruch 1, 2 oder 5, dadurch gekennzeichnet,

daß die Nachrichten zusammen mit einem in einem Gleichwellensender (GWS1 ... n) direkt verwendbaren Taktsignal oder zusammen mit einem dort zur Synchronisation eines Taktsignals verwendbaren Synchronisationssignal von der Zentrale zu den Gleichwellensendern über Funkwege mit konstanten Laufzeiten übertragen werden,

daß am Anfang eines Nutzsignaltelegrammblockes, zu welchem die Nachrichten zusammengefaßt sind, eine Adresse für die Gleichwellensender (GWS1 ... n) übertragen wird und

daß die Systemperiode, d. h. die Zeit von jeweils dem Beginn einer Nachrichtenübertragung von der Zentrale zu den Gleichwellensendern bis zum Beginn der nächsten Nachrichtenübertragung, mindestens gleich der zweifachen Dauer des Nutzsignaltelegrammblockes zuzüglich der maximalen Laufzeit der Funkwege von der Zentrale zu den Gleichwellensendern und von dort zu Empfängern ist.

9. Verfahren nach Anspruch 8, dadurch gekennzeichnet, daß das Synchronisationssignal jeweils am Anfang eines Nutzsignaltelegrammblockes von der Zentrale zu den Gleichwellensendern übertragen wird.

10. Verfahren nach Anspruch 8, dadurch gekennzeichnet, daß das direkt verwendbare Taktsignal jeweils am Ende eines Nutzsignaltelegrammblockes übertragen wird.

11. Anordnung zur Durchführung des Verfahrens nach Anspruch 1, dadurch gekennzeichnet, daß bei den Gleichwellensendern (GWS1 ... n) Taktgeber (Ta) sowie Speicher (S1 ... Sn) oder Verzögerungseinrichtungen (Zv) vorgesehen sind.

12. Anordnung nach Anspruch 11, dadurch gekennzeichnet, daß die Zentrale (Z) ebenfalls einen Taktgeber (Ta) sowie einen Speicher (S) bzw. eine Verzögerungseinrichtung (Zv) aufweist.

13. Anordnung nach Anspruch 11 oder 12, dadurch gekennzeichnet, daß die Speicher Datenspeicher sind.

14. Anordnung nach Anspruch 11 oder 12, dadurch gekennzeichnet, daß die Speicher bzw. Verzögerungseinrichtungen Schieberegister sind.

15. Anordnung nach Anspruch 11 oder 12, dadurch gekennzeichnet, daß die Verzögerungseinrichtungen Eimerkettenschaltungen sind.

16. Anordnung nach Anspruch 11 oder 12, dadurch gekennzeichnet, daß die Zentrale (Z) und die Gleichwellensender (GWS1 ... n) je einen Empfänger (E) zum Empfang eines Zeitzeichensenders, z. B. DCF 77, aufweisen und daß dieses Empfangssignal jeweils den Taktgeber (Ta) synchronisiert.

17. Anordnung zur Durchführung des Verfahrens nach Anspruch 1, dadurch gekennzeichnet,

daß bei den Gleichwellensendern (GWS1 ... n) Speicher (S1 ... Sn) oder Verzögerungseinrichtungen (Zv) vorgesehen sind zur Zwischenspeicherung von Nutzsignaltelegrammblöcken, in welchen die Nachrichten enthalten sind, und

daß von dem nicht unbedingt periodischen Taktsignal beeinflußbare Steuermittel für diese Speicher vorgesehen sind zur Steuerung des Auslesens der Nutzsignaltelegrammblöcke vor deren Übermittlung an die Gleichwellensender bzw. vor Aussendung durch die Gleichwellensender.

18. Anordnung nach Anspruch 17, dadurch gekennzeichnet, daß in der Zentrale (Z, ZS) Mittel vorgesehen sind zur drahtlosen Übermittlung eines in Gleichwellensendern (GWS1 ... n) direkt verwendbaren Taktsignals oder eines Synchronisationssignals zur Synchronisation von in Gleichwellensendern befindlichen Taktgebern (Ta).

19. Anordnung nach Anspruch 12, 17 oder 18 und jeweils zur Durchführung des Verfahrens nach Anspruch 12, dadurch gekennzeichnet, daß in der Zentrale (Z) ein von deren Taktgeber gesteuerter Synchronisationssignalsender (SS) und in wenigstens einem Gleichwellensender (GSWn, Fig. 4, 5) ein Synchronisationsempfänger (SEn) sowie eine Synchronisationseinrichtung (SYN) für den Taktgeber (Ta) des Gleichwellensenders vorgesehen sind.

20. Anordnung nach Anspruch 19, dadurch gekennzeichnet, daß der Synchronisationssignalsender (SS, Fig. 4) ausgebildet ist für eine von dem Gleichwellensender (GWS1 ... n) abweichende Sendezeit und/oder Sendepolarisation und/oder Sendefrequenz.

21. Anordnung nach Anspruch 20, dadurch gekennzeichnet, daß bei einer von der Gleichwellensendezeit abweichenden Sendezeit des Synchronisationssignalsenders (SS, Fig. 4) die Dauer einer Taktsignalperiode (T, Fig. 2) mindestens gleich der Summe aus der Sendedauer für ein Synchronisationssignal und der Sendedauer für einen Nutzsignaltelegrammblock gewählt ist zuzüglich der Laufzeiten für beide Signalarten.

22. Anordnung zur Durchführung des Verfahrens nach Anspruch 8, dadurch gekennzeichnet,

daß in der Zentrale (ZS in Fig. 6) Mittel (Synchronisations- und Nutzsignalsender SNS) vorgesehen sind zur gemeinsam mit der Übermittlung der Nutzsignalblöcke erfolgenden Übermittlung von Adressen oder Sendereinschalttelegrammen für die Gleichwellensender (GWS1 ... n) und von Synchronisationssignalen oder direkt verwendbaren Taktsignalen,

daß in den Gleichwellensendern jeweils ein Nutzsignalspeicher (Sn) oder eine Verzögerungseinrichtung vorgesehen ist für einen von der Zentrale empfangenen Nutzsignaltelegrammblock mit Steuermitteln (Speichersteuerung SST, Decoder D in Fig. 7) zum Auslesen des Nutzsignalspeichers (Sn) und Aussenden des Nutzsignaltelegrammblockes bei Auftreten eines vorbestimmten Phasenwinkels des zugehörigen laufzeitkorrigierten Taktsignals.

23. Anordnung nach Anspruch 19 oder 22, dadurch gekennzeichnet, daß in wenigstens einem Gleichwellensender (GWS1 ... n) Ausgleichmittel (LZG1 ... n) vorgesehen sind zum Ausgleich mindestens der Synchronisations- bzw. Taktsignal-Laufzeitdifferenz gegenüber der maximalen Synchronisations- bzw. Taktsignal-Laufzeit zwischen der Zentrale und einem Gleichwellensender.

24. Anordnung nach Anspruch 23, dadurch gekennzeichnet, daß der Synchronisationssignalsender (SS, Fig. 4) bzw. Synchronisations- und Nutzsignalsender (SNS, Fig. 6) Mittel zur Adressierung des Synchronisationssignales aufweist und der Synchronisationsignalempfänger (SE1 ... n in Fig. 5) bzw. Synchronisations- und Nutzsignalempfänger (SNEn in Fig. 7) Decodierungsmittel enthält für das an ihn adressierte Synchronisations- bzw. Taktsignal.

25. Anordnung nach einem der Ansprüche 11 bis 24, daduch gekennzeichnet, daß in jedem Gleichwellensender ein Nutzsignalregenerator (SR) vorgesehen ist.

26. Anordnung nach Anspruch 25, dadurch gekennzeichnet, daß der Nutzsignalregenerator (SR) eine Einrichtung enthält zum Austasten des Gleichwellensenders für die Zeitdauer eines nicht erkannten und/oder nicht richtig regenerierbaren Nutzsignaltelegramms.

## Claims

1. Method for the simultaneous transmission of communications, which emanate from an exchange, over several common frequency transmitters, characterized thereby, that the communications are stored or delayed in the common frequency transmitters for a waiting time until the longest possible transit time of the communications from the exchange to the common frequency transmitters has elapsed and that the communications are then transmitted synchronously by the common frequency transmitters on a not necessarily periodic timing signal.

2. Method according to claim 1, characterised thereby, that the waiting time is prolonged by a further time span in order to take up possible transit time prolongations due to travel path switching.

3. Method according to claim 1 or 2, characterised thereby, that the timing signal has a period (T), which is longer than the longest possible transit time of the communications from the exchange to the common frequency transmitters, that the exchange sends communications to the common frequency transmitters only on a positive edge ($t_0$) of the timing signal and that the common frequency transmitters transmit the communications on the next positive edge ($t_T$) of the timing signal.

4. Method according to claim 3, characterised thereby, that the timing signal is synchronised in the exchange and the common frequency transmitters by the reception of a time signal transmitter, for example DCF 77.

5. Method according to claim 1 or 2, characterised thereby,

that a periodic timing oscillation serves as timing signal (Fig. 2),

that an information signal telegram block containing the communications is intermediately stored in the exchange (Z, ZS) up to a first predetermined phase angle of the timing oscillation and is delivered addressed to the common frequency transmitters (GWS1 ... n) only on reaching this phase angle,

that this information signal telegram block received by individual common frequency transmitters is intermediately stored in the respective common frequency transmitters up to a second predetermined phase angle of the timing oscillation respectively reproduced in the common frequency transmitter and transmitted only on reaching this second phase angle and

that the duration (T) from reaching the first phase angle to reaching the second phase angle is chosen to be longer than the longest possible transit time of the information signal telegram block from the exchange to one common frequency transmitter.

6. Method according to one of the claims 1 to 3 or 5, characterised thereby, that a timing signal usable directly in a common frequency transmitter (GWS1 ... n) or at least a synchronising signal suitable for the derivation of a timing signal in a common frequency transmitter is generated in the exchange (Z, ZS) and delivered from there wirelessly to at least one common frequency transmitter (GWS), white the communications get to at least one of the common frequency transmitters on a feeder route (1, 2 ... n), which demands a longer transmission time compared with the wireless delivery of the synchronising signal.

7. Method according to claim 6, characterised thereby, that the wireless delivery of the timing signal or of the synchronising signal takes place either a sending frequency differing from the common frequency transmitter frequency (f) and/or with the aid of waves which are polarised differently compared with the common frequency transmitter waves or however on the same sending frequency, for which in the latter case the delivery takes place in the common transmission pauses of the individual common frequency transmitters and/or with the aid of waves which are polarised differently compared with the common frequency transmitter waves.

8. Method according to claim 1, 2 or 5

that the communications are transmitted, together with a timing signal usable directly in a common frequency transmitter or together with a synchronising signal usable there for the synchronisation of a timing signal, from the exchange to the common frequency transmitters over radio paths of constant transit times,

that an address for the common frequency transmitters (GWS1 ... n) is transmitted at the start of an information signal telegram block, into which the communications are combined, and

that the system period, i. e. the time from each start of a communications transmission from the exchange to the common frequency transmitters to the start of the next communications transmission, is at least equal to twice the duration of the information signal telegram block in addition to the maximum transit time of the radio paths from the exchange to the common frequency transmitters and from there to receivers.

9. Method according to claim 8, characterised thereby, that the synchronising signal is transmitted from the exchange to the common frequency transmitters each time at the start of an information signal telegram block.

10. Method according to claim 8, characterised thereby, that the directly usable timing signal is transmitted each time at the end of an information signal telegram block.

11. Arrangement for the performance of the method according to claim 1, characterised thereby, that timing generators (Ta) as well as stores (S1 ... Sn) or delay equipments (Zv) are provided in the common frequency transmitters (GWS1 ... n).

12. Arrangement according to claim 11, characterised thereby, that the exchange (Z) likewise displays a timing generator (Ta) as well as a store (S) or a delay equipment (Zv).

13. Arrangement according to claim 11 or 12, characterised thereby, that the stores are data stores.

14. Arrangement according to claim 11 or 12, characterised thereby, that the stores or delay equipments are shift registers.

15. Arrangement according to claim 11 or 12, characterised thereby, that the delay equipments are bucket chain circuits.

16. Arrangement according to claim 11 or 12, characterised thereby, that the exchange (Z) and the common frequency transmitters (GWS1 ... n) each display a receiver (E) for the reception of a time signal transmitter, for example DCF 77, and that this received signal synchronises the respective timing generator (Ta).

17. Arrangement for the performance of the method according to claim 1, characterised thereby,

that stores (S1 ... Sn) or delay equipments (Zv) are provided in the common frequency transmitters (GWS1 ... n) for the intermediate storage of information signal telegram blocks, in which the communications are contained, and

that control means, which are influenceable by the not necessarily periodic timing signal, are provided for these stores for the control of the reading out of the information signal telegram blocks before their delivery to the common frequency transmitters or before transmission through the common frequency transmitters.

18. Arrangement according to claim 17, characterised thereby, that means are provided in the exchange (Z, ZS) for the wireless delivery of a timing signal usable directly in common frequency transmitters (GSW1 ... n) or of a synchronising signal for the synchronisation of timing generators (Ta) disposed in common frequency transmitters.

19. Arrangement according to claim 12, 17 or 18 and respectively for the performance of the method according to claim 12, characterised thereby, that a synchronising signal transmitter (SS) is provided in the exchange (Z) and controlled by its timing generator and that in at least one common frequency transmitter (GSWn, Figs. 4 and 5), there is provided a synchronisation receiver (SEn) as well as a synchronising equipment (SYN) for the timing generator (Ta) of the common frequency transmitter.

20. Arrangement according to claim 19, characterised thereby, that the synchronising signal transmitter (SS, Fig. 4) is constructed for a transmission time and/or transmission polarisation and/or transmission frequency differing from the common frequency transmitter (GWS1 ... n).

21. Arrangement according to claim 20, characterised thereby, that in the case of a transmission time of the synchronising signal transmitter (SS, Fig. 4) differing from the common frequency transmission time, the duration of a timing signal period (T, Fig. 2) is chosen to be at least equal to the sum of the transmission duration for a synchronising signal and the transmission duration for an information signal telegram block in addition to the transit times for both signal kinds.

22. Arrangement for the performance of the method according to claim 8, characterised thereby.

that means (synchronising and information signal transmitter SNS) are provided in the exchange (ZS in Fig. 6) for the delivery of addresses or transmitter activation telegrams for the common frequency transmitters (GWS1 ... n) and of synchronising signals or directly usable timing signals taking place together with the delivery of information signal blocks and

that a respective information signal store (Sn) or a delay equipment is provided in the common frequency transmitters for an information signal telegram block received from the exchange with control means (storage control SST, decoder D in Fig. 7) for the reading-out of the information signal store (Sn) and transmission of the information signal telegram block on the occurrence of a predetermined phase angle of the associated timing signal corrected for transit time.

23. Arrangement according to claim 19 or 22, characterised thereby, that balancing means (LZG1 ... n) are provided in at least one common frequency transmitter (GWS1 ... n) for the balancing of at least the transit time difference of either the synchronising signal or the timing signal relative to the maximum transit time of either the synchronising signal or the timing signal between the exchange and a common frequency transmitter.

24. Arrangement according to claim 23, characterised thereby, that the synchronising signal transmitter (SS, Fig. 4) or the synchronising and information signal transmitter (SNS, Fig. 6) displays means for the addressing of the synchronising signal and the synchronising signal receiver (SE1 ... n in Fig. 5) or the synchronising and information signal receiver (SNEn in Fig. 7) contains decoding means for the synchronising signal or the timing signal addressed to it.

25. Arrangement according to one of the claims 11 to 24, characterised thereby, that an information signal regenerator (SR) is provided in each common frequency transmitter.

26. Arrangement according to claim 25, characterised thereby, that the information signal regenerator (SR) contains an equipment for the blanking out of the common frequency transmitter for the time duration of an information signal telegram which is not recognised and/or not regenerable correctly.

## Revendications

1. Procédé de transmission simultanée d'informations depuis un point central par plusieurs émetteurs travaillant sur une fréquence commune, caractérisé en ce que les informations sont conservées en mémoire ou temporisées dans les émetteurs jusqu'à ce que se soit écoulé le temps maximal nécessaire à leur transfert du point central aux émetteurs, puis transmises par ces derniers sous le contrôle d'un signal impulsionnel, mais pas forcément périodique.

2. Procédé selon revendication 1, caractérisé en ce que la durée de mémorisation ou de temporisation est prolongée d'un délai supplémentaire destiné à couvrir les temps de commutation intervenant lors du transfert entre point central et émetteurs.

3. Procédé selon revendication 1 ou 2, caractérisé en ce que le signal impulsionnel est périodique, sa période (T) étant plus longue que le temps de transfert maximal des informations entre point central et émetteurs, en ce que le point central ne transmet les informations aux émetteurs que lorsque le signal impulsionnel présente un front positif ($t_0$), et que la transmission des informations par les émetteurs est déclenchée par le front positif suivant ($t_T$) du signal impulsionnel.

4. Procédé selon revendication 3, caractérisé en ce que la synchronisation du signal impulsionnel au point central et aux émetteurs est assurée par la réception d'un top chronométrique, DCF 77 par exemple.

5. Procédé selon revendication 1 ou 2, caractérisé en ce

que le signal impulsionnel (fig. 2) est constitué par une oscillation périodique ;

que le bloc constitué par le signal utile et contenant les informations est mémorisé provisoirement au point central (Z, ZS) jusqu'à ce que le déphasage de l'oscillation périodique atteigne une première valeur déterminée, et n'est transféré qu'à ce moment-là à chacun des émetteurs GWS1 ... n ;

que le bloc ainsi reçu par les divers émetteurs est provisoirement mémorisé dans ceux-ci jusqu'à ce que l'oscillation périodique répétée dans les émetteurs atteigne une deuxième valeur déterminée de déphasage pour n'être transmis qu'à ce moment-là ;

et qu'enfin le temps T séparant les instants respectifs de la première et de la deuxième valeur de déphasage est choisi supérieur au temps de transfert maximal possible du bloc constitué par le signal utile du point central à un émetteur.

6. Procédé selon une des revendications 1 à 3, ou 5, caractérisé en ce qu'un signal impulsionnel directement exploitable dans un émetteur (GWS1 ... n) ou tout au moins un signal de synchronisation pouvant être transformé dans un émetteur en un signal impulsionnel est produit au point central (Z, ZS) et de là rayonné par voie hertzienne vers au moins un émetteur, les informations parvenant d'autre part à au moins un des émetteurs placés sur une des lignes embranchées (1, 2, ..., n), la transmission sur cette dernière demandant plus de temps que l'émission par voie hertzienne du signal de synchronisation.

7. Procédé selon revendication 6, caractérisé en ce que l'émission par voie hertzienne du signal impulsionnel ou de synchronisation a lieu soit sur une fréquence différente de la fréquence commune (f) et/ou au moyen d'ondes polarisées différemment de celles des émetteurs à fréquence commune, soit au contraire sur la même fréquence, et que dans ce dernier cas, l'émission a lieu pendant les pauses communes à tous les émetteurs et/ou au moyen d'ondes polarisées différemment de celles des émetteurs.

8. Procédé selon revendication 1, 2 ou 5, caractérisé en ce

que les informations accompagnées soit d'un signal impulsionnel directement exploitable dans un émetteur, soit d'un signal capable de synchroniser un signal impulsionnel sont transmises du point central aux émetteurs sur des voies hertziennes à temps de transmission constants ;

que l'adresse d'un émetteur (GWS1 ... n) est transmise au début de tout bloc constitué par un signal utile et contenant les informations ;

et que la période du système, c'est-à-dire le temps compris entre le commencement d'une transmission d'informations du point central aux émetteurs et le commencement de la transmission suivante est au moins égale au double de la durée du bloc constitué par le signal utile, augmenté du temps de transmission maximal imposé par les voies hertziennes du point central aux émetteurs, puis des émetteurs aux récepteurs.

9. Procédé selon revendication 8, caractérisé en ce que le signal de synchronisation est transmis au début de tout bloc constitué par un signal utile du point central aux émetteurs.

10. Procédé selon revendication 8, caractérisé en ce que dans chaque cas le signal impulsionnel directement exploitable est transmis à la fin de tout bloc constitué par un signal utile.

11. Installation propre à mettre en œuvre le procédé selon revendication 1, caractérisée en ce que dans les émetteurs (GWS1 ... n) sont prévus des générateurs d'impulsions (Ta) ainsi que des mémoires (S1 ... Sn) ou des dispositifs de temporisation (Zv).

12. Installation selon revendication 11, caractérisée en ce que le point central (Z) est lui aussi équipé d'un générateur d'impulsions et d'une mémoire (S) ou d'un dispositif de temporisation (Zv).

13. Installation selon revendication 11 ou 12, caractérisée en ce que les mémoires sont constituées par des mémoires de données.

14. Installation selon revendication 11 ou 12, caractérisée en ce que les mémoires ou les dispositifs de temporisation sont constitués par des registres à décalage.

15. Installation selon revendication 11 ou 12, caractérisée en ce que les dispositifs de temporisation sont constitués par des circuits BBD.

16. Installation selon revendication 11 ou 12, caractérisée en ce que le point central (Z) et les émetteurs (GWS1 ... n) comportent chacun un récepteur (E) destiné à la réception d'un émetteur de tops chronométriques, DCF 77 par exemple, chaque top ainsi reçu assurant en outre la synchronisation du générateur d'impulsions.

17. Installation propre à mettre en œuvre le procédé selon revendication 1, caractérisée en ce qu'il est prévu dans les émetteurs (GES1 ... n) des mémoires (S1 ... Sn) ou des dispositifs de temporisation (Zv) destinés au stockage temporaire des blocs constitués par le signal utile et contenant les informations ;

et qu'il est également prévu pour ces mémoires des automatismes asservis au signal impulsionnel, lequel n'est pas nécessairement périodique, et destinés à commander l'extraction des blocs constitués par les signaux utiles avant leur transmission aux émetteurs ou leur émission par ces derniers.

18. Installation selon revendication 17, caractérisée en ce qu'il est prévu au point central (Z, ZS) des moyens de transmission par voie hertzienne d'un signal impulsionnel directement exploitable dans les émetteurs (GWS1 ... n) ou d'un signal capable de synchroniser les générateurs d'impulsions (Ta) se trouvant dans les émetteurs.

19. Installation selon revendication 12, 17 ou 18, dans les trois cas en vue de la mise en œuvre du procédé selon revendication 12, caractérisée en ce qu'il est prévu au point central (Z) un émetteur de signaux de synchronisation asservi au générateur d'impulsions de ce point (SS), et en au moins un des émetteurs à fréquence commune (GWSn, fig. 4 et 5) un récepteur de signaux de synchronisation (SEn) et un dispositif de synchronisation (SYN) destiné à piloter le générateur d'impulsions (Ta) de cet émetteur.

20. Installation selon revendication 19, caractérisée en ce que l'émetteur de signaux de synchronisation (SS, fig. 4) est conçu de manière à présenter un temps d'émission et/ou une polarisation à l'émission et/ou une fréquence d'émission différent(e) de celui (ou celle) de l'émetteur à fréquence commune (GWS1 ... n).

21. Installation selon revendication 20, caractérisée en ce que pour un temps d'émission de l'émetteur de signaux de synchronisation différent du temps d'émission de l'émetteur à fréquence commune (SS, fig. 4) la durée d'une période du signal impulsionnel (T, fig. 2) est choisie au moins égale à la somme de la durée d'émission d'un signal de synchronisation et de la durée d'émission du bloc constitué par le signal utile, augmentée des temps de transfert propres à chacun de ces deux types de signaux.

22. Installation destinée à la mise en œuvre du procédé selon revendication 8, caractérisée en ce qu'il est prévu au point central (ZS, fig. 6) des moyens (émetteur de signaux de synchronisation et émetteur de signal utile (SNS) propres à assurer, en même temps que la transmission des blocs constitués par le signal utile, celle d'adresses ou de messages spéciaux d'intervention destinés aux émetteurs (GWS1 ... n), ainsi que de signaux de synchronisation ou de signaux impulsionnels directement exploitables ;

qu'il est prévu dans les émetteurs un dispositif de mémorisation du signal utile (Sn) ou un dispositif de temporisation du bloc constitué par le signal utile en provenance de la centrale, avec en outre des moyens d'asservissement (commande de la mémoire SST, décodeur D fig. 7) destinés à lire le contenu de Sn et à émettre le bloc constitué par le signal utile dès que le signal impulsionnel correspondant, après correction de son temps de transfert, présente un angle de déphasage préalablement défini.

23. Installation selon revendication 19 ou 22, caractérisée en ce qu'en au moins un des émetteurs à fréquence commune (GWS1 ... n) il est prévu des dispositifs d'égalisation (LZG1 ... n) destinés à compenser au minimum la différence des temps de transfert des signaux de synchronisation ou des signaux impulsionnels par rapport au temps de transfert maximal des signaux de synchronisation ou des signaux impulsionnels entre le point central et un des émetteurs à fréquence commune.

24. Installation selon revendication 23, caractérisée en ce que l'émetteur de signaux de synchronisation (SS, fig. 4) ou l'émetteur de signaux de synchronisation et de signaux utiles (SNS, fig. 6) est doté d'un adressage du signal de synchronisation, et que le récepteur de signaux de synchronisation (SE1 ... n, fig. 5) ou le récepteur de signaux de synchronisation et de signaux utiles (SNEn, fig. 7) comporte des moyens de décodage du signal de synchronisation ou du signal impulsionnel à lui adressé.

25. Installation selon une des revendications 11 à 24, caractérisée en ce qu'il est prévu un régénérateur de signaux utiles (SR) dans chaque émetteur à fréquence commune.

26. Installation selon revendication 25, caractérisée en ce que le régénérateur de signaux utiles (SR) comporte un dispositif d'élimination de l'émetteur pendant toute la durée d'un télégramme de signal utile non identifié et/ou non convenablement régénéré.

FIG.1

Taktsignal in Zentrale und GWS

$t_0$ $t_T$ $T$

Meldewunsch eines Systembenutzers

$t_0 - x$

Zentrale meldet Nachricht

$t_0$

erhält Nachricht

GWS1

sendet

$t_1$

$t_T$

erhält Nachricht

GWSn

sendet

$t_n$

$t_T$

− FIG.2

FIG.3

**FIG.4**

**FIG.5**

FIG.6

FIG.7